# DEMANDE DE BREVET EUROPEEN

(11) **EP 1 990 998 A1**
(43) Date de publication de la demande: **12.11.2008**
(21) Numéro de dépôt: 07107822.4
(22) Date de dépôt: 09.05.2007
(51) Int. Cl.: H04N 7/16, G06K 19/077

(54) **Dispositif de gestion de contrôle d'accès connectable à un appareil portable de visualisation**

(71) Demandeur: Nagravision S.A., 1033 Cheseaux-sur-Lausanne (CH)
(72) Inventeur: THAI, Guy, 92400, Courbevoie (FR)
(74) Mandataire: Leman Consulting S.A.

(57) **Abrégé**

Le but de l'invention est de proposer une solution à la présence d'un logement unique destiné à une mémoire de masse dès lors que l'appareil portable concerné doit disposer d'un module de contrôle d'accès.

Ce but est atteint par un dispositif de gestion de contrôle d'accès connectable à un appareil portable de visualisation d'un flux vidéo comprenant une première interface (INT_1) compatible avec une interface de mémoire compacte destinée à être connectée audit appareil portable, ledit dispositif (AD) comprenant module de contrôle d'accès (SM) comprenant une première mémoire (RM) stockant des droits d'accès audit flux vidéo et des moyens cryptographique de traitement de messages sécurisés extrait dudit flux vidéo, caractérisé en ce qu'il comprend une seconde interface de mémoire compacte (INT_2) destinée à recevoir une mémoire compacte (MC) et des moyens de sélection (SEL) pour aiguiller les informations provenant de la première interface soit vers le module de contrôle d'accès, soit vers la seconde interface.

## Description

### Introduction

La présente demande concerne le domaine des modules de stockage compacts, en particulier des modules en forme de carte tels que de type SD, µSD ou MMC.

### Etat de la technique

Ces cartes mémoires ont été développées sous l'impulsion des appareils photos numériques nécessitant une grande capacité de stockage dans un espace réduit. Avec les années, la taille des cartes à été réduite et les capacités ont augmenté. On trouve maintenant des cartes d'environ 1.5 cm² qui disposent d'une capacité de 4 GBytes.

Parallèlement à la réduction de la taille des cartes, il fallait assurer la compatibilité entre les différentes générations et des adaptateurs ont été réalisés. Un tel adaptateur permet d'utiliser une carte µSD dans un appareil pourvu d'un connecteur de type SD grâce à un adaptateur. Ces adaptateurs sont uniquement mécaniques et permettent de relier les signaux numériques d'une interface à l'autre.

Le site www.sdcard.org recense un grand nombre d'applications autour de cette carte dans le domaine de la photo, la télévision, la localisation GPS etc.

Dans les appareils portables capables de visualiser un flux vidéo, tels que PDA, téléphones multimédia, PMP (Personal Media Player) le contrôle d'accès est généralement exécuté dans la carte SIM qui sert également à la gestion (droit, identification) à la communication vocale (GSM, GPRS, UTMA etc.). Cette carte SIM comprend alors un logiciel (Applet) qui permet recevoir des messages du système de gestion d'accès (ECM, EMM) et retourne, après vérification des droits, les clés nécessaires au déchiffrement du flux de données.

Le problème se pose lorsque l'appareil portable dispose d'un logement pour une telle carte et qu'il doit être utilisé par une carte de contrôle d'accès. Ainsi, l'appareil portable ne peut plus disposer de mémoire additionnelle et perd ainsi une de ses fonctions.

### Brève description de l'invention

Ainsi le but de l'invention est de proposer une solution à la présence d'un logement unique destiné à une mémoire de masse dès lors que l'appareil portable concerné doit disposer d'un module de contrôle d'accès.

Ce but est atteint par un dispositif de gestion de contrôle d'accès connectable à un appareil portable de visualisation d'un flux vidéo comprenant une première interface compatible avec une interface de mémoire compacte destinée à être connectée audit appareil portable, ledit dispositif comprenant un module de contrôle d'accès comprenant une première mémoire stockant des droits d'accès audit flux vidéo et des moyens cryptographique de traitement de messages sécurisés extrait dudit flux vidéo, caractérisé en ce qu'il comprend une seconde interface de mémoire compacte destinée à recevoir une mémoire compacte et des moyens pour aiguiller les informations provenant de la première interface soit vers le module de contrôle d'accès, soit vers la seconde interface.

Ainsi, ce dispositif va permettre d'utiliser les cartes de mémoires compactes de type µSD ou MMC dans l'appareil portable d'une manière transparente tout en permettant également de gérer le contrôle d'accès au flux vidéo.

Physiquement, ce dispositif ressemblera à un adaptateur mécanique permettant de passer de la norme standard à la norme micro par exemple les adaptateurs vendus avec les cartes Mini SD Card.

### Brève description des figures

L'invention sera mieux comprise grâce à la description détaillée qui va suivre en se référant aux dessins annexés dans lesquels :
- la figure 1 illustre le dispositif physique, à savoir un adaptateur pour recevoir des mémoires compactes,
- la figure 2 illustre un schéma bloc des éléments composant cet adaptateur.

### Description détaillée de l'invention

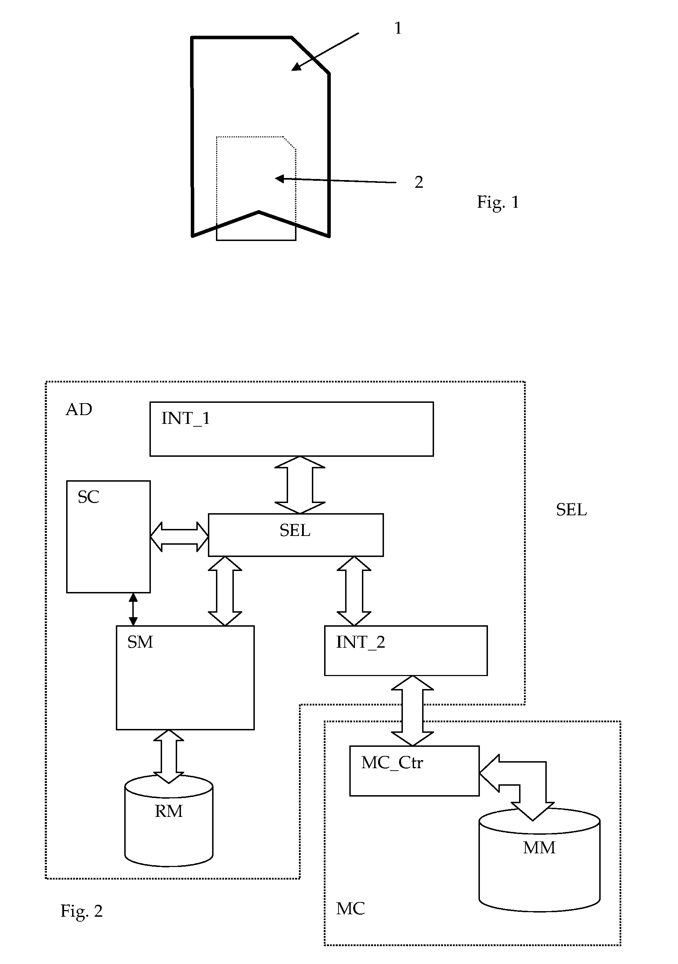

La forme du dispositif de gestion de contrôle d'accès est illustrée à la figure 1. La partie adaptateur 1 est compatible dans sa forme avec le type de carte mémoire qu'il souhaite remplacer. Dans notre cas, il s'agit pour l'exemple d'une carte de type SD. En pointillé est illustré le logement pour la mémoire compacte qui sera introduit dans un logement à cet effet. La mémoire compacte 2 est de type Micro SD selon cet exemple.

Le rôle de l'adaptateur est de pouvoir utiliser les capacités de stockage de la mémoire compacte et d'embarquer les fonctionnalités d'un module de contrôle d'accès.

La figure 2 illustre les éléments de l'adaptateur à savoir une première interface INT_1 vers l'appareil portable, un sélecteur SEL qui permet de connecter cette interface vers les différents éléments de l'adaptateur. Selon le schéma illustré, le sélecteur SEL peut aiguiller les données de la première interface INT_1 vers la seconde interface INT_2 qui est destiné à recevoir une mémoire compacte MC.

Cette mémoire compacte MC, de type conventionnel, comprend généralement un contrôleur MC_Ctr et une mémoire de masse MM.

L'adaptateur AD comprend un module de contrôle d'accès SM en charge des opérations cryptographiques liées au contrôle d'accès. Une mémoire des droits RM stocke les droits, les clés et autres éléments propre à l'utilisateur ainsi qu'à l'opérateur en charge de la diffusion du flux vidéo.

Selon un premier mode de réalisation, le module de contrôle d'accès joue le rôle de fournisseur des clés de sécurité nécessaires au déchiffrement du flux vidéo. Les messages de gestion sont extraits du flux et transmis à l'adaptateur, ces messages étant acheminés au module de contrôle d'accès SM grâce au sélecteur SEL. En retour et après avoir décrypté les messages grâce aux clés stockées dans la mémoire des droits RM puis vérifiés les conditions d'accès audit flux vidéo contenues dans le message par rapport aux droits contenus dans la mémoire des droits RM, la clé permettant de déchiffrer le flux vidéo est retournée à l'appareil portable.

Selon des systèmes bien connus de protection tels que décrit par exemple dans le document EP1078524, il est possible que la clé transmise à l'appareil portable soit encryptée par une clé d'appariement commune au couple adaptateur/appareil portable. Dans ce mode, l'adaptateur fonctionne comme un module de sécurité enfichable utilisé dans les décodeurs de télévision à péage.

Selon un second mode de réalisation, le flux vidéo encrypté est transmis au sélecteur SEL et est acheminé à un module cryptographique SC à haut débit. Ce module déchiffre le flux vidéo grâce aux clés qui sont fournies par le module de contrôle d'accès SM qui fonctionne comme décrit ci-dessus. Le flux vidéo déchiffré est retourné à l'appareil portable pour être visionné.

La présence d'un module de contrôle d'accès SM et d'un module cryptographique SC permet d'envisager d'autres applications. En effet, le module cryptographique peut également chiffrer des données. Ceci peut être utilisé lors du stockage de données dans la mémoire compacte MC. Le flux de données vidéo est déchiffré dans le module de chiffrement/déchiffrement SC selon les clés extraites des messages de gestion transmis avec le flux de données.

Une fois déchiffré, le flux vidéo peut être chiffré avec ledit module de chiffrement/déchiffrement SC avant d'être transmis à la mémoire compacte. Ce rechiffrement pourra être exécuté en utilisant une clé personnelle à l'adaptateur. Ainsi, à chaque utilisation du contenu stocké dans la mémoire compacte MC, le module de sécurité SM sera sollicité afin de fournir la clé correspondante. Ceci permet d'appliquer aux contenus des règles d'utilisation, par exemple le contrôle du nombre de visualisation.

## Revendications

1. Dispositif de gestion de contrôle d'accès connectable à un appareil portable de visualisation d'un flux vidéo comprenant une première interface (INT_1) compatible avec une interface de mémoire compacte destinée à être connectée audit appareil portable, ledit dispositif (AD) comprenant module de contrôle d'accès (SM) comprenant une première mémoire (RM) stockant des droits d'accès audit flux vidéo et des moyens cryptographique de traitement de messages sécurisés extraits dudit flux vidéo, **caractérisé en ce qu'**il comprend une seconde interface de mémoire compacte (INT_2) destinée à recevoir une mémoire compacte (MC) et des moyens de sélection (SEL) pour aiguiller les informations provenant de la première interface soit vers le module de contrôle d'accès, soit vers la seconde interface.

2. Dispositif de gestion de contrôle d'accès selon la revendication 1, **caractérisé en ce qu'**il comprend un logement adapté pour la réception d'une mémoire compacte.

3. Dispositif de gestion de contrôle d'accès selon les revendications 1 ou 2, **caractérisé en ce qu'**il comprend un module cryptographique à haut débit (SC) et **en ce que** les moyens de sélection (SEL) permettant d'aiguiller le flux vidéo vers le module cryptographique (SC), le module de contrôle d'accès (SM) comprenant des moyens pour fournir les clés de déchiffrement.
